# EUROPÄISCHE PATENTSCHRIFT

(11) **EP 0 434 995 B1**
(45) Veröffentlichungstag und Bekanntmachung des Hinweises auf die Patenterteilung: **16.03.1994**
(21) Anmeldenummer: 90122589.6
(22) Anmeldetag: 27.11.1990
(51) Int. Cl.: B65G 65/44, B65G 65/48, B65D 90/54, B65D 90/60

(54) **Silo mit einer Austragvorrichtung**
Silo with a discharging device
Silo équipé d'un dispositif d'évacuation

(30) Priorität: 22.12.1989 DE 3942558
(43) Veröffentlichungstag der Anmeldung: 03.07.1991
(73) Patentinhaber: Schwedes, Jörg, Prof. Dr.-Ing., D-38102 Braunschweig (DE); Schulze, Dietmar, Dipl.-Ing, D-38104 Braunschweig (DE); Lyle, Christopher, D-38104 Braunschweig (DE)
(72) Erfinder: Schwedes, Jörg, Prof. Dr.-Ing., D-38102 Braunschweig (DE); Schulze, Dietmar, Dipl.-Ing, D-38104 Braunschweig (DE); Lyle, Christopher, D-38104 Braunschweig (DE)
(74) Vertreter: Lins, Edgar, Dipl.-Phys. Dr.jur.

(56) Entgegenhaltungen:
- CH-A- 659 052
- DE-A- 2 306 627
- DE-A- 3 107 966
- DE-B- 1 023 407
- DE-C- 971 058
- FR-A- 1 101 576
- US-A- 2 209 613
- US-A- 3 973 703

## Beschreibung

Die Erfindung betrifft ein Silo mit einer Austragvorrichtung zum dosierten Austragen des Schüttgutes aus dem Silo.

Es sind zahlreiche Austragvorrichtungen bekannt, die den beim Austrag von Schüttgütern aus einem Silo auftretenden Problemen Rechnung tragen sollen. Eine übliche Siloentleerung findet bei gut fließenden Schüttgütern über einen Entnahmetrichter statt. Aufgrund der Querschnittsverengung im Trichter kann es zu toten Zonen, Schacht- oder Brückenbildung des Schüttgutes kommen, wodurch die Entnahme ggf. gestört wird. Ferner kommt es bei der Entnahme über einen Trichter oft zu ungleichmäßigen Verweilzeiten des Schüttgutes in dem Silo, was für manche Materialien unerwünscht ist.

Es sind daher mehrere Systeme vorgeschlagen worden, mit denen das Austragen des Schüttgutes aus dem Silo kontrolliert stattfinden soll. Gebräuchliche Systeme weisen im Siloboden wenigstens einen Längsschlitz auf, unter dem sich eine Förderschnecke befindet. Bei einer aus der DE 23 56 161 B2 bekannten Anordnung rotiert über dem Boden eines kreisrunden Silos eine Mitnahmevorrichtung in Form von mehreren Armen. Diese haben die Aufgabe, das Schüttgut in den Schlitz zu schieben, wobei die Arme so profiliert sind, daß eine entsprechende Bewegung des Schüttgutes auch bei einer Hin- und Herbewegung der Arme erfolgen kann. Eine gleichmäßig dosierte Schüttgutentnahme ist mit einem derartigen System nicht möglich. Darüber hinaus kann es bei problematischen Materialien zu Verdichtungen des Materials kommen, die ein Verfestigen des Schüttgutes auf dem Boden bewirken, so daß eine hohe Antriebsleistung erforderlich ist, um das Material in den Bereich des Austragschlitzes zu fördern.

Bei einer aus der DE 24 00 547 B2 bekannten Vorrichtung ist oberhalb eines Austragschlitzes ein oszillierender Rahmen vorgesehen, der mit großen Durchbrüchen versehen ist. Mit Hilfe des Rahmens wird nur ein Teil des Schüttgutes in den Bereich des Austragschlitzes gefördert, während ein anderer Teil die Durchbrüche des Rahmens füllt und über den Schlitz nicht abtransportierbar ist. Darüber hinaus kommt es durch die Oszillationsbewegung auch dann zu Verdichtungen an der Silowand, wenn der Oszillationshub des Rahmens nur klein ist.

Aus der DE 31 07 966 ist es bekannt, den kreisrunden Siloboden mit rotierenden Rahmen vollständig zu überstreichen. Die Arme sind bogenförmig ausgebildet und so angeordnet, daß dem Material eine radiale Bewegung verliehen wird. Dementsprechend befindet sich eine Austragöffnung im Zentrum des Silobodens. Es ist ersichtlich, daß das außen am Siloboden lagernde Material mit dem betreffenden Arm über einen langen Weg transportiert werden muß, bevor es in die zentrale Austragöffnung gelangt. Auf diesem langen Transportweg sind Verdichtungen des Materials unvermeidlich, so daß eine hohe Antriebsleistung erforderlich ist. Das Schüttgut wird hierbei bevorzugt aus dem Bereich in der Nähe der Austragöffnungen abgezogen, so daß sich daraus eine breite Verweilzeitverteilung ergibt.

Aus der DE 30 42 414 C2 ist noch eine Vorrichtung zur Wiedererregung des Flusses in Schüttgutsilos bekannt, bei der oberhalb der eigentlichen Austragvorrichtungen ein Zwischenboden eingesetzt ist, der eine Mehrzahl von Durchgangsöffnungen aufweist. Der Zwischenboden dient der Entlastung der Austragvorrichtung vom statischen Druck der Schüttgutsäule. Die Durchgangsöffnungen sind so dimensioniert, daß das Schüttgut im Normalfall durch die Durchgangsöffnungen aufgrund des Eigengewichts hindurchtritt und in die Austragsvorrichtungen gelangt. Nur wenn sich gleichermaßen als Störung Brücken oberhalb der Durchgangsöffnungen bilden, wird ein oberhalb des Zwischenbodens angeordnetes Vibrationsgitter angetrieben, um die Brücken zu zerstören und den Fluß in dem Schüttgutsilo wieder zu erregen. Eine Austragvorrichtung ist damit nicht beschrieben.

Durch die DE-AS 1 023 407 ist es bekannt, den Boden eines Silos durch Stränge einer Förderkette zu bilden. Unterhalb dieser Stränge der Förderkette ist ein Leitboden vorgesehen, in dem sich Schlitze befinden, durch die von der Förderkette bewegtes Schüttgut hindurchfallen kann. Die Schlitze liegen ersichtlich senkrecht zur Förderrichtung der Förderkette und weisen eine einstellbare wirksame Schlitzbreite auf, die auch in der größtmöglichen Abmessung nur einen Bruchteil der Länge des Leitbodens zwischen den Schlitzen in Förderrichtung gesehen beträgt. Das Schüttgut wird daher auf dem Leitboden, insbesondere in den Randbereichen über lange Strecken durch die Förderkette transportiert und auf diesem Transportweg erheblich verdichtet. Am in Förderrichtung gesehenen hinteren Rand des Silos ragt der Leitboden unter die Wand des Silos, so daß das Schüttgut mit der Förderkette durch einen schmalen Schlitz zwischen Leitboden und Seitenwand des Silos zum Ende des Leitbodens transportiert werden muß, wobei wiederum eine Verdichtung des Schüttgutes erfolgt.

Die der Erfindung zugrundeliegende Problemstellung besteht darin, an einem Silo einen Austrag zu realisieren, der kontrolliert und dosiert erfolgt und der eine enge Verweilzeitverteilung für das Schüttgut ermöglicht.

Ausgehend von dieser Problemstellung weist das erfindungsgemäße Silo mit einer Austragvorrichtung zum dosierten Austragen des Schüttguts aus dem Silo folgende Merkmale auf:
- Ein Siloboden, der über seine gesamte Fläche mit einer großen Anzahl von Austragöffnungen versehen ist;
- die Austragöffnungen weisen eine solche Größe auf, daß die größtmöglichen Partikel des Schüttguts hindurchtreten können, das Schüttgut im Ruhezustand jedoch Brücken oberhalb der Austragöffnungen bildet;
- eine Mitnahmevorrichtung überstreicht während des Austragens ständig den Siloboden oberhalb der Austragöffnungen über die gesamte Fläche des Silobodens und
- die Mitnahmevorrichtung und die Austragöffnungen sind so zueinander angeordnet, daß sich immer eine Austragöffnung in Bewegungsrichtung der Mitnahmevorrichtung mit so geringem Abstand vor einem Mitnehmer der Mitnahmevorrichtung befindet, daß keine merkliche Verdichtung des Schüttgutes durch die Bewegung der Mitnahmevorrichtung stattfindet.

Bei dem erfindungsgemäßen Silo findet beim Stillstand der Mitnahmevorrichtung kein Austrag statt, da das Schüttgut über den Austragöffnungen Brücken bildet. Die Brücken werden durch die Mitnahmevorrichtung zerstört. Darüber hinaus sorgt die Mitnahmevorrichtung für einen Transport des Schüttgutes zur nächsten Austragöffnung, die aufgrund der großen Anzahl der Austragöffnungen auf kurzem Wege erreicht wird. Auf diesem kurzen Wege findet keine merkliche Verdichtung des Schüttgutes statt, so daß einerseits ein gleichmäßiger dosierter Austrag erreicht wird, andererseits auch nur eine geringe Antriebsenergie für die Mitnahmevorrichtung benötigt wird. Da durch die relative Anordnung der Austragöffnungen zu der Mitnahmevorrichtung sichergestellt ist, daß das Schüttgut durch die Mitnahmevorrichtung auf kurzem Wege immer in eine Austragöffnung transportiert wird, gibt es weder lange Transportwege noch Stellen des Silobodens, an denen Schüttgut bewegt wird, ohne daß es innerhalb kürzester Wege und Zeit in eine Austragöffnung gelangt. Der sich durch die Bewegung des Schüttgutes an der Mitnahmevorrichtung aufbauende Druck wird somit immer wieder dadurch wirksam vermindert, daß Schüttgut vorzugsweise ständig durch die Austragöffnungen fällt und aus dem Bereich der Mitnahmevorrichtung gelangt, so daß Teile des Schüttguts an der Vorderkante eines Mitnehmers ständig ausgetragen werden. Die Mitnahmevorrichtung überstreicht die gesamte Fläche des Silobodens, so daß ein kontrollierter Austrag über die gesamte Fläche des Silobodens erfolgt.

Ein Verstopfen der Austragöffnung wird wirksam verhindert, wenn sich die Austragöffnungen nach unten hin erweitern. Daher liegt hierin eine besonders bevorzugte Ausführungsform der Erfindung.

Die Austragöffnungen können im wesentlichen gleichmäßig über den Siloboden verteilt sein. Nur in Ausnahmefällen kommt eine ungleichmäßige Verteilung der Austragöffnungen über den Siloboden in Betracht, wenn für den Austrag bestimmte Geschwindigkeitsprofile erzeugt werden sollen.

Die Austragöffnungen können prinzipiell eine beliebige Form aufweisen, bevorzugt sind jedoch kreisrunde Austragöffnungen oder Austragöffnungen in Schlitzform, die sich vorzugsweise über den gesamten Boden erstrecken. Die Schlitze können dabei schräg zur Bewegungsrichtung von Leisten der Mitnahmevorrichtung angeordnet sein, um eine gleichmäßige Verteilung der benötigten Antriebskraft zu erzielen. Der Siloboden ist dabei vorzugsweise rechteckig ausgebildet.

Die Größe der erfindungsgemäßen Austragöffnungen muß an das jeweilige Schüttgut angepaßt sein. Kommt für ein Silo eine Verwendung für mehrere Schüttgüter in Betracht, ist es besonders zweckmäßig, wenn die Größe der Austragöffnungen verstellbar ausgebildet ist. Hierzu kann in einer einfachen Ausführungsform unterhalb der Austragöffnungen im Siloboden eine Platte mit die Öffnungen des Silobodens ergänzenden Fortsetzungsöffnungen verschiebbar angeordnet sein. Durch eine Verschiebung läßt sich der wirksame Querschnitt der Öffnungen verkleinern. Sind die Austragöffnungen Schlitze, verändert sich lediglich die Breite der Schlitze.

Bei einem kreisrunden Siloboden ist es zweckmäßig, wenn die Mitnahmevorrichtung durch wenigstens einen um eine im Mittelpunkt des Silobodens angeordnete Achse rotierenden Arm gebildet ist. Zweckmäßigerweise ist dabei unterhalb des Silobodens ein weiterer Boden mit einem über ihm rotierenden Ausräumarm angeordnet. Der dosierte Austrag erfolgt durch die Austragöffnungen des Silobodens, während der Ausräumarm lediglich zum Abtransport des dosierten Schüttgutes dient. Der Ausräumarm kann mit der im Mittelpunkt des Silobodens angeordneten Achse verbunden sein, so daß sowohl Ausräumarm als auch der Arm der Mitnahmevorrichtung durch einen gemeinsamen Antrieb rotieren. Dabei ist allerdings darauf zu achten, daß die Förderkapazität des Ausräumarms höher ist als die pro Zeiteinheit durch die Austragöffnungen tretende Schüttgutmenge, um ein Verstopfen des Austrags aufgrund des oberhalb des weiteren Bodens liegenden, mit Schüttgut gefüllten Raums zu verhindern.

Auch bei anders geformten Siloböden ist es zweckmäßig, wenn unterhalb des Bodens eine Abtransporteinrichtung angeordnet ist. Wenn die Mitnahmevorrichtung bei einem rechteckigen Siloboden in einer vorteilhaften Ausführungsform durch einen Leistenförderer gebildet ist, kann dieser mit seinem Untertrum unterhalb des Silobodens als Abförderorgan dienen.

In einer anderen Ausführungsform kann der Leistenförderer eine Hin- und Herbewegung ausführen, wobei der Siloboden an seinen in Richtung der Hin- und Herbewegung befindlichen Rändern Austragöffnungen aufweist, damit der Austrag auch an den Rändern sichergestellt ist. In diesem Fall ist es zweckmäßig, unterhalb des Silobodens einen normalen Gurtförderer zur Abförderung des ausgetragenen Schüttgutes vorzusehen.

In allen Fällen ist es, insbesondere für schwerfließende Schüttgüter, vorteilhaft, wenn unterhalb des Silobodens eine Abtransportvorrichtung wenigstens in der Größe der Fläche des Silobodens angeordnet ist. Der Abtransport geschieht dann ohne eine Querschnittsverengung, und damit ohne eine mögliche Verdichtung des Schüttguts.

Die Erfindung soll im folgenden anhand von in der Zeichnung dargestellten Ausführungsbeispielen näher erläutert werden. Es zeigen:
- Figur 1 -: einen Vertikalschnitt durch den unteren Teil eines Silos mit einem Siloboden und einem darunter angeordneten weiteren Boden
- Figur 2 -: einen Schnitt entlang der Linie A-A in Figur 1 mit Draufsicht auf den Siloboden
- Figur 3 -: einen Schnitt entlang der Linie B-B in Figur 1 mit einer Draufsicht auf den weiteren Boden
- Figur 4 -: einen vertikalen Schnitt durch den Bodenbereich eines rechteckigen Silos mit einem mit Schlitzen versehenen Siloboden
- Figur 5 -: einen senkrecht zum Vertikalschnitt gemäß Figur 4 stehenden Vertikalschnitt
- Figur 6 -: einen Horizontalschnitt entlang der Linie A-A in Figur 4 mit einer Draufsicht auf den Siloboden und einem darüber bewegten Leistenförderer
- Figur 7 -: einen vertikalen Schnitt durch ein Silo in einer weiteren Ausführungsform mit einem rechteckigen Boden und einem umlaufenden Leistenförderer
- Figur 8 -: einen Schnitt entlang der Linie A-A in Figur 7 mit einer Draufsicht auf den rechteckigen Siloboden
- Figur 9 -: einen Schnitt durch eine spezielle Ausführungsform zur Veränderung der Schlitzbreite im Siloboden.

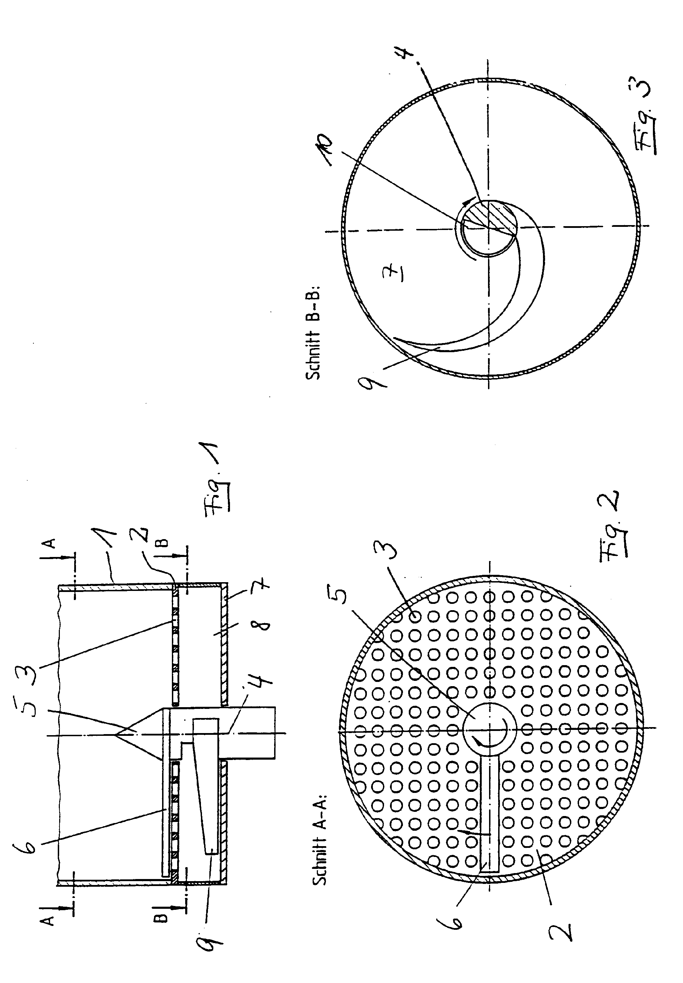

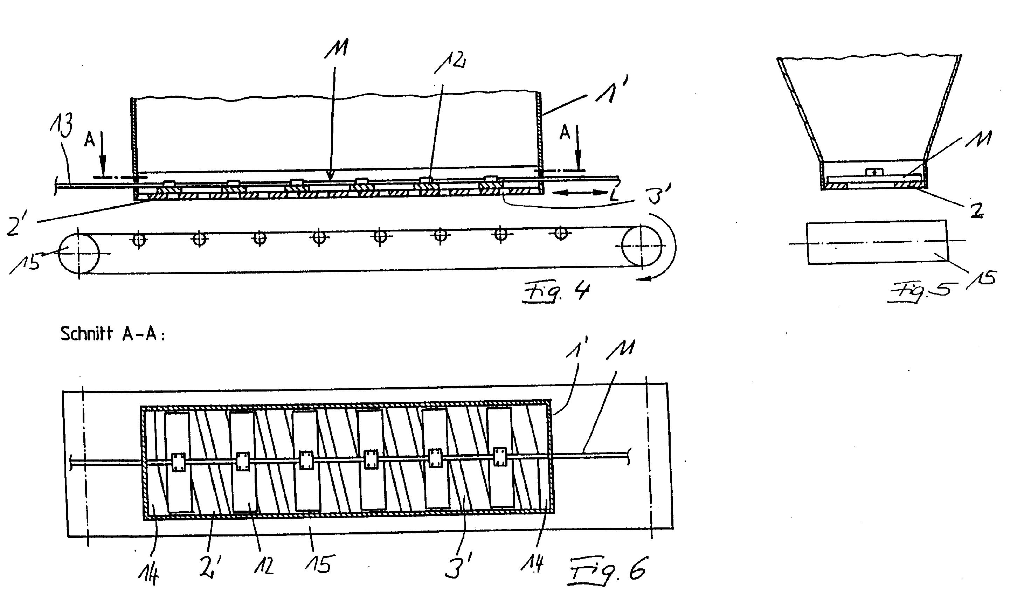

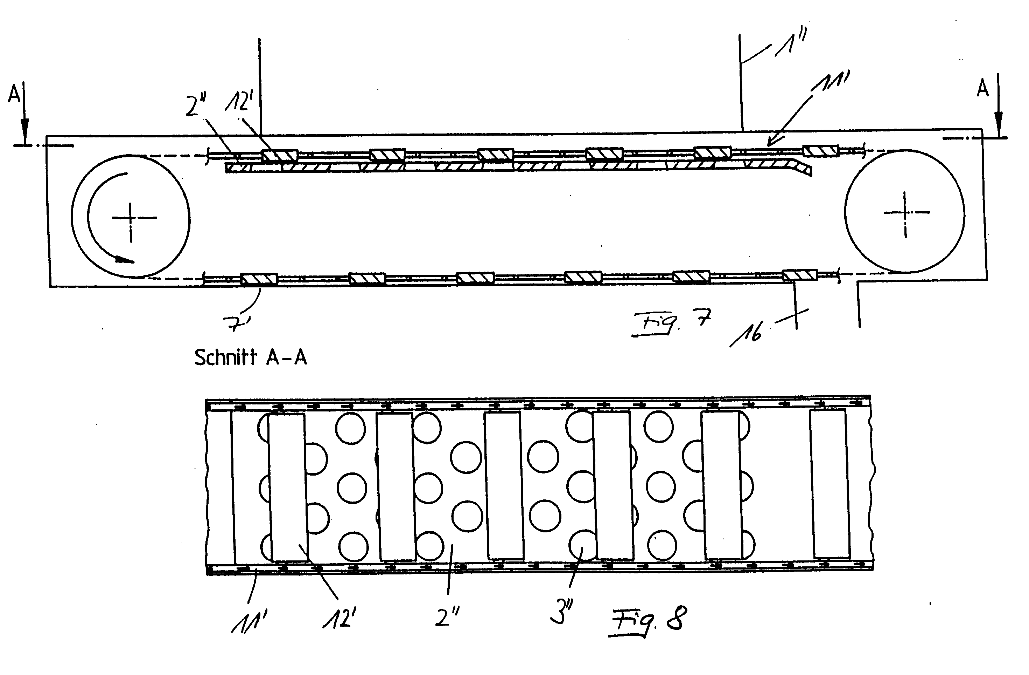

Bei der in den Figuren 1 bis 3 dargestellten Ausführungsform liegt ein zylindrischer Silo 1 mit einem kreisrunden Querschnitt vor. Der Silo 1 ist unten mit einem Siloboden 2 abgeschlossen, der mit einer Vielzahl von gleichmäßig über die gesamte Fläche des Silobodens 2 verteilten kreisrunden Austragsöffnungen 3 versehen ist. Im Zentrum des Silobodens 2 befindet sich ein rotierender Hohlzylinder 4, der oberhalb des Silobodens 2 mit einem Spitzkegel 5 abgeschlossen ist. An dem rotierenden Hohlzylinder 4 ist ober halb des Silobodens ein Arm 6 angebracht, der sich bis zu Innenwand des Silos 1 erstreckt. Unterhalb des Silobodens 2 ist ein weiterer, geschlossener Boden 7 angeordnet, durch den unterhalb des Silobodens 2 ein Abtransportraum 8 definiert ist. Innerhalb dieses Abtransportraums 8 überstreicht ein Ausräumarm 9 den weiteren Boden 7. Der Ausräumarm 9 ist in an sich bekannter Weise gebogen ausgebildet, wobei seine konkave Wölbung in Drehrichtung nach vorn zeigt. Der Ausräumarm 9 ist tangential an dem rotierenden Zylinder angebracht. Ein Hohlraum 10 des Hohlzylinders 4 dient als zentrale Abtransportöffnung für das mit Hilfe des Ausräumarms 9 aufgrund dessen besonderer Formgebung radial nach innen geförderte Schüttgut.

Die Größe der Austragöffnungen im Siloboden 2 ist so dimensioniert, daß das Schüttgut bei nicht rotierendem Arm 6 der Mitnahmevorrichtung nicht durch die Austragöffnungen 3 hindurchtritt, sondern über den Austragöffnungen 3 Brücken bildet. Das durch den Arm 6 der Mitnahmevorrichtung mitgenommene Schüttgut wird auf kürzestem Wege zu Austragöffnungen 3 gefördert und fällt somit durch den Siloboden 2 hindurch, weil der Arm 6 der Mitnahmevorrichtung zugleich die über den Austragöffnungen 3 gebildeten Brücken zerstört.

Die Kapazität des Ausräumarms 9 muß höher liegen als die Durchtrittsmenge durch die Austragöffnungen 3 bei rotierendem Arm 6 der Mitnahmevorrichtung, um ein Vollaufen des Abtransportraumes 8 zu verhindern, der ein Verstopfen der Austragöffnungen 3 bewirken würde.

Figur 1 läßt erkennen, daß sich die runden Austragöffnungen 3 zur Unterseite hin konisch erweitern, was einer Verstopfung der Austragöffnungen 3 mit Schüttgut entgegenwirkt.

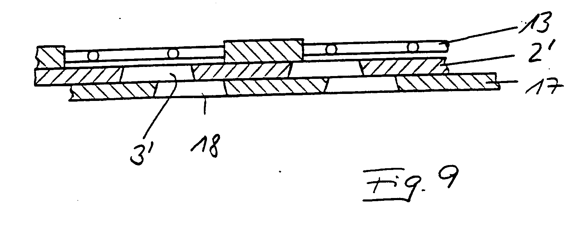

Die Figuren 4 bis 6 zeigen ein anderes Ausführungsbeispiel, bei dem ein Silo 1' einen rechteckigen Querschnitt aufweist. Der Siloboden 2' kann sich dabei in einem trichterförmigen etwas verengten Teil befinden oder auch direkt den Boden eines im Querschnitt unveränderten Silos darstellen. Der Siloboden 2' ist mit Austragöffnungen 3' in Form von schrägen Schlitzen versehen, die sich über die gesamte Breite des Silobodens 2 erstrecken. Die Schlitze 3' verlaufen schräg zur Längsachse des Bodens. Oberhalb des Silobodens 2' ist ein Leistenförderer 11 angeordnet, dessen senkrecht zur Längsachse des Bodens verlaufenden Leisten 12 mit einer in Längsrichtung angeordneten Verbindungsstange 13 miteinander verbunden sind. Die Verbindungsstange 13 ist seitlich aus dem Silo 1' herausgeführt und dort mit einem (nicht dargestellten) Antrieb zur Hin- und Herbewegung des Leistenförderers 11 in Richtung des in Figur 4 eingezeichneten Doppelpfeils L verbunden. An den kurzen gegenüberliegenden Silowänden, die den Silo 1' in der Bewegungsrichtung des Leistenförderers 11 abschließen, sind modifizierte Austragöffnungen 14 vorgesehen, die sich über die gesamte Breite des Silobodens 2' erstrecken und dafür sorgen, daß mit Hilfe des hin- und herbewegten Leistenförderers 11 kein Schüttgut gegen eine Wand des Silos 1' verdichtet wird. Da das zur Wand des Silos 1' transportierte Schüttgut durch die modifizierten Austragöffnungen 14 herausfallen kann, ist eine derartige Verdichtung ausgeschlossen.

Unterhalb des Silobodens 2' ist ein Gurtförderer 15 vorgesehen, der das ausgetragene Schüttgut abfördert.

Das in den Figuren 7 und 8 dargestellte Ausführungsbeispiel bezieht sich wiederum auf ein Silo 1'' mit einem rechteckigen Querschnitt und einem entsprechend rechteckigen Siloboden 2''. Der Siloboden 2'' weist in diesem Ausführungsbeispiel kreisrunde Austragöffnungen 3'' auf, die von einem Leistenförderer 11' überstrichen werden. Die Leisten 12' des Leistenförderers 11' sind durch seitliche Ketten miteinander verbunden und bilden einen umlaufenden Endlosförderer. Der Untertrum des Leistenförderers 11' gleitet über einen weiteren Boden 7' unterhalb des Silobodens 2'' und fördert somit das durch den Siloboden 2'' hindurchgetretene Schüttgut zu einer Abtransportöffnung 16. Der Leistenförderer 11' erfüllt daher sowohl die Funktion der Mitnahmevorrichtung als auch die Funktion der Abtransportvorrichtung.

Figur 9 verdeutlicht bei einer Anordnung des Silobodens 2' und eines Leistenförderers 13, wie sie in Figur 4 dargestellt ist, wie durch eine unter dem Siloboden 2' angeordnete, seitlich verschiebbare Platte 17 die wirksame Größe der Austragöffnungen 3' verkleinert werden kann. Die Platte 17 weist hierzu Fortsetzungsöffnungen 18 auf, die bei genau fluchtender Stellung der Platte 17 zum Siloboden 2' die divergierende Wandung der Austragschlitze 3' fortsetzen. Durch eine seitliche Verschiebung der Platte 17, wie sie in Figur 9 dargestellt ist, entsteht eine resultierende Schlitzöffnung, die einerseits durch eine Wand der Austragöffnungen 3' im Boden 2' und andererseits durch die komplementäre Wand der Platte 17 gebildet ist. Durch das Maß der Verschiebung der Platte 17 kann das Maß der Querschnittsverkleinerung der Austragöffnungen 3' eingestellt werden.

## Patentansprüche

1. Silo mit einer Austragvorrichtung zum dosierten Austragen des Schüttgutes aus dem Silo (1,1',1'') mit folgenden Merkmalen:
- Ein Siloboden (2,2',2'') ist über seine gesamte Fläche mit einer großen Anzahl von Austragöffnungen (3,3',3'') versehen;
- die Austragöffnungen (3,3',3'') weisen eine solche Größe auf, daß die größtmöglichen Partikel des Schüttguts hindurchtreten können, das Schüttgut im Ruhezustand jedoch Brücken oberhalb der Austragöffnungen (3,3',3'') bildet;
- eine Mitnahmevorrichtung (6,11,11') überstreicht während des Austragens ständig den Siloboden (2,2',2'') oberhalb der Austragöffnungen (3,3',3'') über die gesamte Fläche des Silobodens (2,2',2'');
- die Mitnahmevorrichtung (6,11,11') und die Austragöffnungen (3,3',3'') sind so zueinander angeordnet, daß sich immer eine Austragöffnung (3,3',3'') in Bewegungsrichtung der Mitnahmevorrichtung (6,11,11') mit so geringem Abstand vor einem Mitnehmer der Mitnahmevorrichtung (6,11,11') befindet, daß keine merkliche Verdichtung des Schüttgutes durch die Bewegung der Mitnahmevorrichtung stattfindet.

2. Silo nach Anspruch 1, bei dem sich die Austragöffnungen (3,3',3'') nach unten hin erweitern.

3. Silo nach Anspruch 1 oder 2, bei dem die Austragöffnungen (3,3',3'') im wesentlichen gleichmäßig über den Siloboden (2,2',2'') verteilt sind.

4. Silo nach einem der Ansprüche 1 bis 3, bei dem die Austragöffnungen (3,3'') kreisrund ausgebildet sind.

5. Silo nach einem der Ansprüche 1 bis 3, bei dem die Austragöffnungen (3,3') als sich über den Boden (2') erstreckende Schlitze ausgebildet sind.

6. Silo nach Anspruch 5, bei dem die Schlitze (3') schräg zur Bewegungsrichtung von Leisten (12) der Mitnahmevorrichtung (11) angeordnet sind.

7. Silo nach Anspruch 5 oder 6, bei dem der Siloboden (2') rechteckig ist.

8. Silo nach einem der Ansprüche 1 bis 7, bei dem die Größe der Austragöffnungen (3,3',3'') verstellbar ausgebildet ist.

9. Silo nach Anspruch 8, bei dem unterhalb der Austragöffnungen (3,3',3'') im Siloboden (2,2',2'') eine Platte (17) mit die Austragöffnungen (3,3',3'') des Silobodens (2,2',2'') ergänzenden Fortsetzungsöffnungen (18) verschiebbar angeordnet ist.

10. Silo nach einem der Ansprüche 1 bis 5, 8 und 9 mit einem runden Siloboden (2), bei dem die Mitnahmevorrichtung durch wenigstens einen um eine im Mittelpunkt des Silobodens (2) angeordnete Achse rotierenden Arm (6) gebildet ist.

11. Silo nach Anspruch 10, bei dem unterhalb des Silobodens (2) ein weiterer Boden (7) mit einem über ihm rotierenden Ausräumarm (9) angeordnet ist.

12. Silo nach Anspruch 10 und 11, bei dem der Ausräumarm (9) mit der im Mittelpunkt des Silobodens angeordneten Achse verbunden ist.

13. Silo nach einem der Ansprüche 1 bis 9, bei dem die Mitnahmevorrichtung bei einem rechteckigen Siloboden (2',2'') durch einen Leistenförderer (11,11') gebildet ist.

14. Silo nach Anspruch 13, bei dem der Leistenförderer (11') mit seinem Untertrum unterhalb des Silobodens (2'') als Abförderorgan dient.

15. Silo nach Anspruch 13, bei dem der Leistenförderer (11) eine Hin- und Herbewegung ausführt und der Siloboden (2') an seinem in Richtung der Hin- und Herbewegung befindlichen Rändern Austrittsöffnungen (14) aufweist.

16. Silo nach einem der Ansprüche 1 bis 15, bei dem unterhalb des Silobodens (2,2',2'') eine Abtransportvorrichtung (7,9; 11',15) mindestens in der Größe der Fläche des Silobodens (2,2',2'') angeordnet ist.

17. Silo nach einem der Ansprüche 1 bis 16, bei dem die Mitnahmevorrichtung (6, 11, 11') und die Austragöffnungen (3, 3', 3'') so zueinander angeordnet sind, daß Teile des an der Vorderkante eines Mitnehmers bewegten Schüttguts durch ein Durchfallen durch wenigstens eine Austragöffnung (3,3',3'') während der Bewegung der Mitnahmevorrichtung (6, 11,11') ständig ausgetragen werden, so daß sich ständig neues Schüttgut an der Vorderkante des Mitnehmers befindet.

## Claims

1. Silo having a discharging apparatus for the metered discharge of the bulk material from the silo (1, 1', 1''), having the following features:
- a silo base (2, 2', 2'') is provided, over its entire surface, with a large number of discharging openings (3, 3', 3'');
- the discharging openings (3, 3', 3'') have a size such that the largest possible particles of the bulk material can pass through, but in the rest condition the bulk material forms bridges above the discharging openings (3, 3', 3'');
- during discharge, an entraining apparatus (6, 11, 11') constantly brushes over the silo base (2, 2', 2'') above the discharging openings (3, 3', 3''), over the entire surface of the silo base (2, 2', 2'');
- the entraining apparatus (6, 11, 11') and the discharging openings (3, 3', 3'') are arranged with respect to one another such that there is always a discharging opening (3, 3', 3'') in the direction of movement of the entraining apparatus (6, 11, 11') which has a spacing in front of an entrainer of the entraining apparatus (6, 11, 11') which is sufficiently small for no appreciable compression of the bulk material to take place as a result of the movement of the entraining apparatus.

2. Silo according to Claim 1, in which the discharging openings (3, 3', 3'') widen downwards.

3. Silo according to Claim 1 or 2, in which the discharging openings (3, 3', 3'') are distributed substantially uniformly over the silo base (2, 2', 2'').

4. Silo according to one of the Claims 1 to 3, in which the discharging openings (3, 3'') are of circular construction.

5. Silo according to one of Claims 1 to 3, in which the discharging openings (3, 3') are constructed as slots extending over the base (2').

6. Silo according to Claim 5, in which the slots (3') are arranged obliquely with respect to the direction of movement of strips (12) of the entraining apparatus (11).

7. Silo according to Claim 5 or 6, in which the silo base (2') is rectangular.

8. Silo according to one of Claims 1 to 7, in which the size of the discharging openings (3, 3', 3'') is constructed to be adjustable.

9. Silo according to Claim 8, in which a plate (17) having continuation openings (18) which supplement the discharging openings (3, 3', 3'') of the silo base (2, 2', 2'') is displaceably arranged below the discharging openings (3, 3', 3'') in the silo base (2, 2', 2'').

10. Silo according one of Claims 1 to 5, 8 and 9, having a round silo base (2), in which the entraining apparatus is formed by at least one arm (6) which rotates about an axis arranged at the centre point of the silo base (2).

11. Silo according to Claim 10, in which a further base (7) having a clearing arm (9) rotating above it is arranged below the silo base (2).

12. Silo according to Claim 10 and 11, in which the clearing arm (9) is connected to the axis arranged at the centre point of the silo base.

13. Silo according to one of the Claims 1 to 9, in which, the silo base (2', 2'') being rectangular, the entraining apparatus is formed by a strip conveyor (11, 11').

14. Silo according to Claim 13, in which the strip conveyor (11') by means of its lower run serves as a conveying-away member below the silo base (2'').

15. Silo according to Claim 13, in which the strip conveyor (11) performs a to-and-fro movement and the silo base (2') has exit openings (14) at those edges located in the direction of the to-and-fro movement.

16. Silo according to one of Claims 1 to 15, in which a transporting-away apparatus (7, 9; 11', 15) of at least the size of the surface of the silo base (2, 2', 2'') is arranged below the silo base (2, 2', 2'').

17. Silo according to one of Claims 1 to 16, in which the entraining apparatus (6, 11, 11') and the discharging openings (3, 3', 3'') are arranged with respect to one another such that some of the bulk material moved at the leading edge of an entrainer is constantly discharged as a result of falling through at least one discharging opening (3, 3', 3'') during the movement of the entraining apparatus (6, 11, 11'), so that there is constantly new bulk material at the leading edge of the entrainer.

## Revendications

1. Silo comportant un dispositif d'extraction pour l'extraction dosée de la matière en vrac hors du silo (1, 1', 1''), avec les caractéristiques suivantes :
- un fond de silo (2, 2', 2'') est doté sur toute sa surface d'un grand nombre d'ouvertures d'extraction (3, 3', 3'');
- les ouvertures d'extraction (3, 3', 3'') présentent une taille telle que les plus grandes particules possibles de la matière en vrac peuvent les traverser, mais que la matière en vrac forme au repos des ponts au-dessus des ouvertures d'extraction (3, 3', 3'');
- pendant l'extraction, un dispositif d'entraînement (6, 11, 11') racle en permanence le fond de silo (2, 2', 2'') au-dessus des ouvertures d'extraction (3, 3', 3'') sur toute la surface du fond de silo (2, 2', 2'');
- le dispositif d'entraînement (6, 11, 11') et les ouvertures d'extraction (3, 3', 3'') sont disposés de telle sorte l'un par rapport aux autres que dans la direction du déplacement du dispositif d'entraînement (6, 11, 11'), une ouverture d'extraction (3, 3', 3'') se trouve toujours à une distance d'un élément d'entraînement du dispositif d'entraînement (6, 11, 11') assez petite pour qu'aucun compactage notable de la matière en vrac n'ait lieu à cause du déplacement d'un dispositif d'entraînement.

2. Silo selon la revendication 1, dans lequel les ouvertures d'extraction (3, 3', 3'') s'élargissent vers le bas.

3. Silo selon la revendication 1 ou 2, dans lequel les ouvertures d'extraction (3, 3', 3'') sont distribuées en substance régulièrement à travers le fond de silo (2, 2', 2'').

4. Silo selon une des revendications 1 à 3, dans lequel les ouvertures d'extraction (3, 3'') sont de forme circulaire.

5. Silo selon une des revendications 1 à 3, dans lequel les ouvertures d'extraction (3, 3') ont la forme de fentes s'étendant à travers le fond (2').

6. Silo selon la revendication 5, dans lequel les fentes (3') sont disposées obliquement par rapport à la direction du déplacement de lames (12) du dispositif d'entraînement (11).

7. Silo selon la revendication 5 ou 6, dans lequel le fond de silo (2') est rectangulaire.

8. Silo selon une des revendications 1 à 7, dans lequel la taille des ouvertures d'extraction (3, 3', 3'') est ajustable.

9. Silo selon la revendication 8, dans lequel une plaque (17), comportant des ouvertures de prolongement (18) prolongeant les ouvertures d'extraction (3, 3', 3'') du fond de silo (2, 2', 2''), est disposée à glissement en dessous des ouvertures d'extraction (3, 3', 3'') du fond de silo (2, 2', 2'').

10. Silo selon une des revendications 1 à 5, 8 et 9, comportant un fond de silo (2) rond, dans lequel le dispositif d'entraînement est formé par au moins un bras (6) tournant autour d'un axe disposé au centre du fond de silo (2).

11. Silo selon la revendication 10, dans lequel un autre fond (7), comportant un bras d'évacuation (9) tournant à travers lui, est disposé en dessous du fond de silo (2).

12. Silo selon les revendications 10 et 11, dans lequel le bras d'évacuation (9) est relié à l'axe disposé au centre du fond de silo.

13. Silo selon une des revendications 1 à 9, dans lequel pour un fond rectangulaire (2', 2''), le dispositif d'entraînement est formé par un transporteur à lames (11, 11').

14. Silo selon la revendication 13, dans lequel la nappe inférieure du transporteur à lames (11, 11'), située en dessous du fond de silo (2''), sert d'organe d'extraction.

15. Silo selon la revendication 13, dans lequel le transporteur à lames (11) exécute un déplacement en va-et-vient, le fond de silo (2') présentant des ouvertures de sortie (14) sur ses bords situés dans la direction du déplacement en va-et-vient.

16. Silo selon une des revendications 1 à 15, dans lequel un dispositif d'enlèvement (7, 9; 11', 15), au moins de la taille de la surface du fond de silo (2, 2', 2''), est disposé en dessous du fond de silo (2, 2', 2'').

17. Silo selon une des revendications 1 à 16, dans lequel le dispositif d'entraînement (6, 11, 11') et les ouvertures d'extraction (3, 3', 3'') sont disposés l'un par rapport aux autres de telle sorte que des parties de la matière en vrac déplacée contre le bord avant d'un élément d'entraînement sont extraites en permanence par une chute à travers au moins une ouverture d'extraction (3, 3', 3'') pendant le déplacement du dispositif d'entraînement (6, 11, 11'), de sorte que de la nouvelle matière en vrac est située en permanence contre le bord avant de l'élément d'entraînement.
